# EUROPÄISCHE PATENTSCHRIFT

(11) **EP 3 029 646 B1**
(45) Veröffentlichungstag und Bekanntmachung des Hinweises auf die Patenterteilung: **30.01.2019**
(21) Anmeldenummer: 14195593.0
(22) Anmeldetag: 01.12.2014
(51) Int. Cl.: G08B 17/107, G08B 17/113, G01N 21/53

(54) **Streulichtrauchmelder mit einer zweifarbigen Leuchtdiode**
Scattered light smoke detector with a two-colour light emitting diode
Détecteur de fumée à écran diffusant doté d'une diode lumineuse bicolore

(43) Veröffentlichungstag der Anmeldung: 08.06.2016
(73) Patentinhaber: Siemens Schweiz AG, 8047 Zürich (CH)
(72) Erfinder: Allemann, Martin, 8620 Wetzikon (CH); Schmid, Brigitt, 8608 Bubikon (CH); Walker, Stefan, 6460 Altdorf (CH)
(74) Vertreter: Maier, Daniel Oliver

(56) Entgegenhaltungen:
- EP-A1- 2 093 733
- EP-A2- 0 877 345
- WO-A1-00/07161
- GB-A- 2 397 122
- US-A1- 2009 080 185

## Beschreibung

Die Erfindung betrifft einen Streulichtrauchmelder mit einer nach dem Streulichtprinzip arbeitenden Detektionseinheit. Die Detektionseinheit umfasst eine Leuchtdiode zum Bestrahlen von zu detektierenden Partikeln und einen dafür spektral empfindlichen Photosensor zur Detektion des von den Partikeln gestreuten Lichts. Die Leuchtdiode weist eine optische Hauptachse und der Photosensor eine optische Empfangsachse auf. Die Leuchtdiode und der Photosensor sind derart zueinander angeordnet und ausgerichtet, dass durch beide optischen Achsen ein Streulichtwinkel festgelegt ist. Die Leuchtdiode weist einen ersten und zweiten LED-Chip zum Aussenden eines ersten und zweiten Lichtbündels mit Licht in einem ersten und in einem davon verschiedenen zweiten Wellenlängenbereich auf. Weiterhin umfasst die Leuchtdiode einen orthogonal zur optischen Hauptachse angeordneten LED-Chipträger auf, auf dem die beiden LED-Chips nebeneinander angeordnet sind.

Derartige Rauchmelder werden auch als Brandmelder bezeichnet. Sie weisen typischerweise ein Meldergehäuse mit zumindest einer Raucheintrittsöffnung sowie eine im Meldergehäuse aufgenommene Detektionseinheit für die Rauchdetektion auf. Die Detektionseinheit umfasst vorzugsweise eine gegen Umgebungslicht abgeschirmte, jedoch für zu detektierenden Rauch durchlässige optische Messkammer. Letztere weist üblicherweise eine Vielzahl von Umgebungslicht abschirmenden Lamellen auf und wird daher auch als Labyrinth bezeichnet.

Mit der Leuchtdiode und dem Photosensor ist eine elektronische Steuereinheit als Teil des Rauchmelders verbunden. Die Steuereinheit ist dazu eingerichtet, eine Warnmeldung und/oder eine Alarmmeldung auszugeben, falls ein jeweiliger Mindestkonzentrationswert von Rauch detektierbar ist.

Aus dem Stand der Technik sind weiterhin Rauchmelder bekannt, die zwei unterschiedlich farbige Leuchtdioden sowie einen Photosensor in einer oder in zwei Streulichtanordnungen einsetzen. Zur Aussendung des roten oder infraroten Lichts ist der Einsatz einer rotleuchtenden LED oder einer Infrarot-LED, zur Aussendung von blauem oder violettem Licht der Einsatz einer blau- bzw. violettleuchtenden LED bekannt. Durch geeignete Auswertung des vom Photosensor empfangenen jeweiligen farbigen Streulichts, wie z.B. durch Verhältnisbildung, ist dann eine Auswertung hinsichtlich der Partikelgrösse der detektierten Rauchpartikel möglich. Mittels geeigneter Bewertung der ermittelten Partikelgrössen ist z.B. eine Unterscheidung von Rauch, Staub und Wasserdampf möglich. Die Ausgabe eines möglichen Fehlalarms wird dadurch vermieden.

Aus der EP 0 877 345 A2 ist ein Rauchsensor mit einer Lichtempfangseinrichtung zum zeitlich abwechselnden Empfangen gestreuten Lichts zweier verschiedener Wellenlängen λ₁, λ₂ und mit einer Recheneinrichtung zum Durchführen einer zur Rauchdetektion benötigten Berechnung aus einer Streulichtausgabe y der Wellenlänge λ₁ und einer Streulichtausgabe g der Wellenlänge λ₂ der Lichtempfangseinrichtung offenbart. Der Rauchsensor umfasst zudem eine Rauchdetektionsverarbeitungseinrichtung zum Durchführen eines Rauchdetektionsprozesses auf Grundlage einer Rechenergebnisausgabe der Recheneinrichtung. Die Recheneinrichtung umfasst Mittel zum Abschätzen eines Ausgabewerts entweder der Streulichtausgabe y der Wellenlänge λ₁ oder der Streulichtausgabe g der Wellenlänge λ₂ auf, die zeitlich abwechselnd von der Lichtempfangseinrichtung ausgegeben werden, an einem Aufnahmezeitpunkt der jeweils anderen Ausgabe. Weiterhin weist der Rauchsensor Mittel zum Erhalten eines Verhältnisses zwischen dem geschätzten Ausgabewert des einen Streulichts am Aufnahmezeitpunkt der anderen Ausgabe und einem Ausgabewert des anderen Streulichts als Zwei-Wellenlängen-Verhältnis auf. In der FIG. 13 ist eine schematische Darstellung einer Streulichtanordnung mit einer Zweifarben-Leuchtdiode mit zwei LED-Chips und mit einer Lichtempfangseinrichtung unter einem Streulichtwinkel θ dargestellt. Die bekannten Rauchmelder sind typischerweise zum Betrieb an einer Melderlinie mit einer Vielzahl weiterer daran angeschlossener Rauchmelder oder zum batteriegestützten Stand-Alone-Betrieb eingerichtet. Dies bedingt für beide Fälle, dass nur eine sehr geringe mittlere elektrische Leistung von weniger als 10 mW zur Verfügung steht. Die Ansteuerung der Leuchtdioden zum Aussenden des jeweiligen Lichts erfolgt daher typischerweise gepulst. Ebenso ist die gesamte "Elektronik" für einen möglichst geringen Leistungsbedarf ausgelegt.

Bekannt ist aus dem Stand der Technik auch der Einsatz zweier nebeneinander angeordneter einfarbiger Leuchtdioden, deren ausgesandtes Licht z.B. über ein Y-förmiges optisches Sammelelement oder mittels zweier zusammengeführter Lichtleiter auf eine gemeinsame optische Achse zusammengeführt wird.

Aus der nachveröffentlichten Europäischen Patentanmeldung EP 2 908 298 A1 der Anmelderin ist die Verwendung einer einzigen Leuchtdiode mit zwei nebeneinander angeordneten LED-Chips mit unterschiedlichen Farben bekannt. Der erste Chip sendet vorzugsweise rotes oder infrarotes Licht aus. Der zweite Chip sendet vorzugsweise blaues oder ultraviolettes Licht aus. Bei dieser Anordnung ist eine Chipachse, die durch beide LED-Chips verläuft, parallel zur Ebene, die durch die optische Achse des Photosensors sowie durch die der Leuchtdiode aufgespannt wird. Bedingt durch die Nebeneinanderanordnung der beiden LED-Chips auf einem gemeinsamen Träger resultieren auch zwei optische Achsen, die um ca. 15° bis 25° voneinander abweichen. Die dortige Streulichtanordnung weist somit zwei verschiedene Streulichtwinkel auf.

Ausgehend von dem eingangs genannten Stand der Technik ist es eine Aufgabe der Erfindung, einen verbesserten Rauchmelder anzugeben.

Die Aufgabe wird mit den Gegenständen des Hauptanspruchs gelöst. Vorteilhafte Ausführungsformen der vorliegenden Erfindung sind in den abhängigen Ansprüchen angegeben. Erfindungsgemäss ist die Leuchtdiode derart um ihre optische Hauptachse gedreht zum Photosensor ausgerichtet, dass eine durch beide LED-Chips verlaufende Chipachse orthogonal zu einer durch beide optischen Achsen aufgespannten Winkelebene ist. Die Chipachse verläuft zudem orthogonal zur optischen Hauptachse der Leuchtdiode. Sie verläuft insbesondere parallel zu der jeweiligen optisch aktiven Oberfläche der beiden LED-Chips. Alternativ können beide LED-Chips zumindest teilweise überlappend angeordnet sein.

Die beiden LED-Chips sind als Flächenstrahler ausgebildet. Mit "Flächenstrahler" ist hier gemeint, dass das Licht aus einer ebenen Fläche mit einer Lambert'schen Lichtverteilung abgestrahlt wird. Die Flächenstrahler können somit auch als Lambert-Strahler bezeichnet werden.

Die LED-Chips stammen üblicherweise aus einem Wafer mit einer Vielzahl in einem optoelektronischen Halbleiterprozess hergestellter LED-Chips. Ein solcher Wafer wird durch mechanische Trennprozesse, insbesondere durch Sägen oder Brechen, in die Vielzahl der LED-Chips zerlegt. Ein solches "nacktes" und für sich vollständig funktionsfähiges Bauteil wird auch als "Die" bezeichnet. Es weist daher eine typischerweise quadratische oder auch rechteckige Form auf.

Der Kern der Erfindung liegt in der Erkenntnis, dass durch Drehen der Leuchtdiode um 90° im Vergleich zur Anordnung gemäss der nachveröffentlichten Europäischen Patentanmeldung EP 2 908 298 A1 eine Streulichtanordnung mit nur einem Streulichtwinkel für beide Farben resultiert.

Dadurch ist vorteilhaft eine verlässlichere Auswertung der beiden "Farbsignale" möglich, da diese aus Sicht des Photosensors nun unter einem gleichen Streulichtwinkel empfangen werden. Die bekanntermassen deutlichen Unterschiede beim Empfang von Streulichtsignalen unter verschiedenen Streulichtwinkeln entfallen und somit auch die damit verbundenen messtechnischen Ungenauigkeiten bzw. Unschärfen.

Ein weiterer Vorteil liegt darin, dass der typischerweise radial von aussen nach innen in die Detektionseinheit eindringende Rauch wegen des vorliegenden gleichen Streulichtwinkels nahezu gleichzeitig detektiert wird. Ein zeitlicher Versatz in der Rauchdetektion, wie dies bei der um 90° gedrehten Anordnung gemäss der nachveröffentlichten Europäischen Patentanmeldung EP 2 908 298 A1 der Fall ist, entfällt weitgehend.

Ein weiterer Grundgedanke der Erfindung liegt zum anderen in der Integration von zwei einzelfarbigen Leuchtdioden zu einer einzigen (nur) zweifarbigen Leuchtdiode.

Dadurch reduziert sich vorteilhaft die Bauteilanzahl. Ein weiterer Vorteil liegt darin, dass auf eine aufwändige Kalibrierung des optischen Pfads nach der Montage der zweifarbigen Leuchtdiode verzichtet werden kann. Üblicherweise erfordern die bei der Montage von zwei Leuchtdioden auftretenden relativen Abweichungen in Ausrichtung und Platzierung zueinander eine aufwändige Kalibrierung.

Nach einer Ausführungsform sind die beiden LED-Chips derart nebeneinander angeordnet, dass die jeweilige geometrische Mitte der beiden LED-Chips einen gleichen Abstand zur optischen Hauptachse der Leuchtdiode aufweist.

Dadurch liegt das jeweilige Abstrahlmaximum der beiden LED-Chips symmetrisch zur optischen Hauptachse. Die geometrische Mitte liegt z.B. im Fall von LED-Chips mit quadratischer oder rechteckiger Form im Schnittpunkt zweier Flächendiagonalen.

Vorzugsweise sind die beiden LED-Chips derart nebeneinander angeordnet, dass die Chipachse sowohl durch die optische Hauptachse der Leuchtdiode als auch durch die jeweilige geometrische Mitte der beiden LED-Chips verläuft. Dadurch lassen sich die von beiden LED-Chips ausgesandten Lichtbündel noch exakter unter einem gleichen Streulichtwinkel ausrichten.

Nach einer bevorzugten Ausführungsform sind die beiden LED-Chips orthogonal zur optischen Achse der Leuchtdiode auf dem Chipträger ausgerichtet. Mit anderen Worten verläuft die Flächennormale des insbesondere planen Chipträgers parallel zur optischen Hauptachse der Leuchtdiode. Die beiden LED-Chips sind nebeneinander auf dem LED-Chipträger und folglich auch plan auf dem LED-Chipträger angeordnet. Ihre jeweiligen Flächennormalen verlaufen gleichfalls parallel zur optischen Hauptachse der Leuchtdiode.

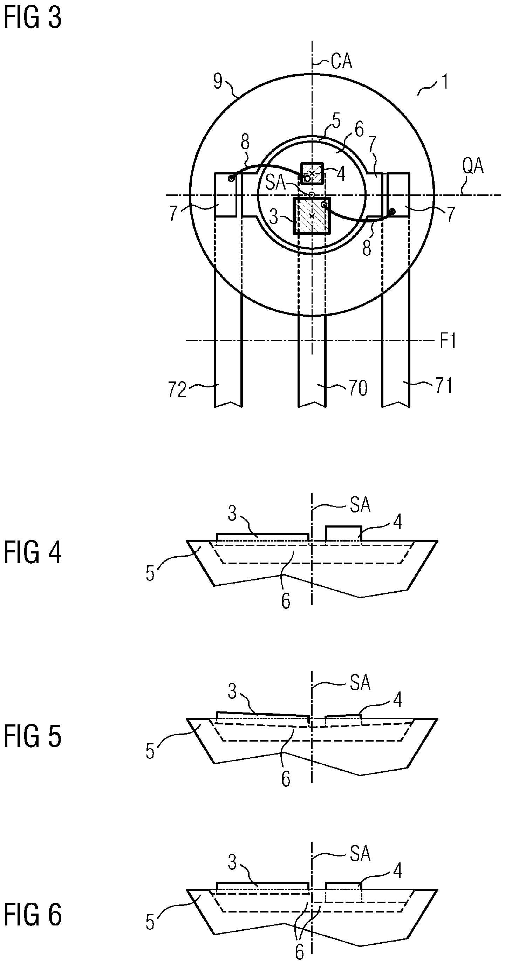

Der LED-Chipträger muss nicht notwendiger plan ausgeführt sein. Er kann auch zwei leicht zueinander geneigte Teilflächen im Sinne einer Kerbe aufweisen, die jeweils einen LED-Chip aufnehmen. Dadurch werden die beiden ausgesandten Lichtbündel aufeinander zu ausgerichtet (siehe FIG 5). Der Chipträger kann auch zwei ebene Teilflächen mit gleicher Orientierung aufweisen, aber durch eine Stufe voneinander getrennt sind. Die Stufung kann so gewählt sein, dass bei unterschiedlicher Bauteildicke der beiden LED-Chips die optisch aktiven Flächen in einer gemeinsamen Ebene liegen (siehe FIG 6).

Nach einer weiteren bevorzugten Ausführungsform weist die Leuchtdiode zumindest zwei oder drei Anschlusskontakte auf, die aus einem Gehäuse der Leuchtdiode herausgeführt sind. Die Anschlusskontakte sind mit den LED-Chips derart kontaktiert, dass der erste oder der zweite LED-Chips elektrisch zur Lichtaussendung ansteuerbar ist. Im Falle von nur zwei Anschlusskontakten sind die beiden LED-Chips antiparallel geschaltet, sodass je nach Polarität des Erregerstroms entweder der erste oder der zweite LED-Chips leuchtet. Im Falle von drei Anschlusskontakten bildet einer einen gemeinsamen Anschlusskontakt für beide LED-Chips. In diesem Fall können neben einer selektiven Ansteuerung auch beide LED-Chips gleichzeitig angesteuert werden.

Vorzugsweise liegen die Anschlusskontakte gemeinsam in einer ersten Reihenflucht. Sie sind zudem parallel zur optischen Hauptachse aus dem Gehäuse der Leuchtdiode herausgeführt. Die erste Reihenflucht verläuft sowohl orthogonal zur optischen Hauptachse als auch orthogonal zur Chipachse.

Dadurch ist durch ein gemeinsames Umbiegen aller Anschlusskontakte um 90° eine einfache Montage und Kontaktierung in einem Schaltungsträger möglich.

Weiterhin liegt gemäss der Erfindung das Verhältnis der optisch aktiven Oberfläche des ersten LED-Chips zu der optisch aktiven Oberfläche des zweiten LED-Chips in einem Bereich von 1.3 bis 12, insbesondere in einem Bereich von 2,5 bis 6,5. Der erste LED-Chip emittiert Licht im blaugrünen, blauen, violetten oder ultravioletten Bereich und der zweite LED-Chip Licht im rot/orangen, roten oder infrarotem Bereich.

Mit "optisch aktiv" sind die Teile der Oberfläche der LED-Chips gemeint, die bei Stromerregung Licht emittieren. Bereiche für die Kontaktierung der LED-Chips auf der Oberfläche, die z.B. zur Kontaktierung eines Bonddrahts bestimmt sind, gehören somit nicht dazu.

Nach einer weiteren Ausführungsform ist der erste LED-Chip zum Aussenden von Licht im Wellenlängenbereich von 350 nm bis 500 nm ausgebildet. Der zweite LED-Chip ist zum Aussenden von Licht im Wellenlängenbereich von 665 nm bis 1000 nm ausgebildet. Insbesondere ist der erste LED-Chip zum Aussenden von Licht mit einer Wellenlänge von 460 nm ± 40 nm oder 390 nm ± 40 nm und der zweite LED-Chip zum Aussenden von Licht mit einer Wellenlänge von 940 nm ± 40 nm oder 860 nm ± 40 nm ausgebildet.

Vorzugsweise weist die Leuchtdiode eine Symmetrie- oder konstruktive Hauptachse auf, welche mit der optischen Hauptachse zusammenfällt. Im Fall von bekannten 5 mm- oder 3 mm-LED, die "off the shelf" als massenhaftes Consumerprodukt verkauft werden, ist dies die Rotationssymmetrieachse bezogen auf das Kunststoffgehäuse derartiger Leuchtdioden.

Alternativ kann die Leuchtdiode mit den beiden LED-Chips eine SMD-Leuchtdiode sein. Ein solches SMD-Bauteil ist für die direkte Oberflächenmontage auf einem Schaltungsträger ausgebildet. Der SMD-Leuchtdiode können auch ein Lichtleiter oder ein Spiegel optisch nachgeschaltet sein, welche die ausgesandten Lichtbündel z.B. um 90° umlenken.

Der Erfindung liegt die weitere Erkenntnis zugrunde, dass hinsichtlich des elektrischen Leistungsbedarfs für die optische Rauchdetektion vor allem der "blaue" Anteil der massgebliche ist. Grund hierfür ist der erheblich schlechtere Wirkungsgrad bei der Erzeugung von blauem Licht im Vergleich zu rotem bzw. infrarotem LED-Licht. Typischerweise ist die Erzeugung von blauem bzw. violettem Licht in etwa um den Faktor 10 schlechter als die Erzeugung von roten bzw. infrarotem Licht. Für die Erzeugung von blauem Licht mit einer Wellenlänge von 470 nm (LED-Typ SFH4570 von OSRAM) wird somit circa die 11-fache optisch aktive Oberfläche für eine gleiche Bestrahlungsstärke erforderlich wie für die Erzeugung von infrarotem Licht mit einer Wellenlänge von 940 nm (LED-Typ SFH4550 von OSRAM) benötigt.

Hinzu kommt die deutlich schlechtere spektrale Empfindlichkeit von blauem Licht bei Silizium-PIN-Photodioden, die üblicherweise als Photosensoren eingesetzt werden. So ist unter Annahme der zuvor beschriebenen beispielhaften OSRAM-LEDs die Detektion des blauen Lichts um den Faktor 1.7 schlechter als die Detektion des infraroten Lichts (siehe dazu FIG 5). Für die gesamte elektrisch-optisch-elektrische Wirkungsgradkette resultiert in Summe sogar ein Faktor von ca. 19 = 11 x 1.7.

Weiterhin gemäss der Erfindung wird nun die optisch aktive Oberfläche des blauleuchtenden LED-Chips so bemessen, dass ein qualitativ ausreichendes Photosensorsignal für eine zuverlässige Rauchdetektion gewährleistet ist. Dagegen kann wegen des erheblich besseren elektrisch-optisch-elektrischen Wirkungsgrades des "roten" Anteils die Oberfläche des "roten" LED-Chips für die Erzeugung des roten bzw. infraroten Lichts auf einen Bruchteil reduziert werden. Dadurch reduzieren sich vorteilhaft der elektrische Leistungsbedarf sowie die Kosten für eine derartige zweifarbige LED.

Nach einer weiteren Ausführungsform weist der Streulichtrauchmelder eine gegenüber Umgebungslicht abgeschirmte, jedoch für zu detektierende Partikel durchlässige Detektionseinheit auf. In der Detektionseinheit sind die Leuchtdiode und der Photosensor sowie eine dazwischenliegende Blendeneinrichtung angeordnet. Die Blendeneinrichtung umfasst eine Blendenöffnung. Die gebildete Blendenöffnung ist typischerweise rechteckig. Sie kann aber auch rund sein. Die Blendeneinrichtung ist derart angeordnet und ausgerichtet, dass ein Grossteil des von den beiden LED-Chips ausgesandten Lichts in einem Bereich zwischen 50% und 85% durch die Blendenöffnung hindurchtritt.

Dadurch dass beide Lichtbündel eine gewisse Beleuchtungsreserve aufweisen, indem das jeweilige Lichtbündel auch einen Teil der Blendeneinrichtung beleuchtet, ist trotz Verkippung (Tilt), Verdrehung oder Versatz der Leuchtdiode eine weitgehend homogene Beleuchtung des Streulichtzentrums möglich. Eine derartige Detektionseinheit ist zudem gegen Stoss und Vibration mechanisch und funktional robuster.

Nach einer weiteren Ausführungsform weist die Leuchtdiode ein Gehäuse aus einem insbesondere transparenten Kunststoff auf. Das Gehäuse bildet in einem Bereich zwischen dem Lichtaustritt aus den beiden LED-Chips und dem Lichtaustritt an der Aussenseite des Gehäuses eine optische Linse aus. Mit "transparent" ist hier gemeint, dass das Kunststoffgehäuse zumindest für das vom ersten und zweiten LED-Chip stammende emittierte Licht durchlässig ist.

Alternativ oder zusätzlich ist zwischen der Leuchtdiode und der Blendenöffnung eine optische Linseneinheit angeordnet. Dadurch ist eine Lichtbündelung und/oder Lichtlenkung des von den beiden LED-Chips ausgesandten Lichts in Richtung zum vorgesehenen Streulichtbereich in der Detektionseinheit möglich.

Nach einer Ausführungsform weist der Rauchmelder eine mit der Leuchtdiode und mit dem Photosensor verbundene elektronische Steuereinheit auf. Die Steuereinheit ist dazu eingerichtet, eine Warnmeldung und/oder eine Alarmmeldung auszugeben, falls ein jeweiliger Mindestkonzentrationswert von Rauch detektierbar ist.

Die Steuereinheit ist vorzugsweise ein Mikrocontroller. Sie ist dazu eingerichtet, die beiden LED-Chips zum Aussenden des jeweiligen Lichts elektrisch anzusteuern und dazu synchronisiert das jeweilige elektrische Signal vom Photosensor zu erfassen und auszuwerten. Durch Differenzbildung oder Verhältnisbildung aus den beiden jeweiligen, der "Farbe" zugeordneten empfangenen Signalamplituden des Photosensors ist dann eine Bestimmung der Partikelgrösse möglich. Durch Vergleich vorzugsweise des "blauen" Signals mit einem jeweiligen Mindestkonzentrationswert ist eine Warnmeldung und/oder eine Alarmmeldung ausgebbar. Die jeweiligen Verarbeitungsschritte für die zeitliche Ansteuerung der beiden LED-Chips sowie die synchronisierte Erfassung und Auswertung des jeweiligen Photosensorsignals können durch geeignete, auf dem Mikrocontroller ausführbare Programmschritte realisiert sein.

Einer vorteilhaften Ausführungsform zufolge ist die Steuereinheit dazu eingerichtet, den ersten LED-Chip mit seinem spezifizierten Nennstrom anzusteuern. Die Steuereinheit ist weiterhin dazu eingerichtet, den zweiten LED-Chip mit einem im Vergleich zu seinem spezifizierten Nennstrom festlegbaren Reduktionsfaktor anzusteuern.

Mit "spezifizierten Nennstrom" ist hier der vom Leuchtdiodenhersteller typischerweise in einem Datenblatt spezifizierte Nennstromwert gemeint. Dadurch ist vorteilhaft eine Reduktion der für den Betrieb des zweiten LED-Chips erforderlichen elektrischen Leistung möglich. Grund hierfür ist eine fertigungs- und montagetechnisch bedingte Mindestchipgrösse für den zweiten LED-Chip, das heisst für den rotleuchtenden LED-Chip. Durch den Reduktionsfaktor, der typischerweise im Bereich zwischen 2 bis 4 liegt, wird sozusagen eine "elektronische Verkleinerung" der Chipfläche des zweiten LED-Chips bewirkt. Darüber hinaus ist über diesen Reduktionsfaktor auch eine Kalibrierung der Ansteuerung für den ersten und zweiten LED-Chip vorteilhaft möglich. Die Stromreduktion und somit auch die Leistungsreduktion kann z.B. mittels einer pulsweitenmodulierten Ansteuerung des zweiten LED-Chips erfolgen. Dabei entspricht der Reduktionsfaktor im Bereich von 2 bis 4 dem Tastverhältnis der Pulsweitenmodulation. Die Ansteuerfrequenz liegt vorzugsweise im Bereich von 100 kHz bis 10 MHz.

Vorzugsweise ist der Reduktionsfaktor durch die unterschiedliche spektrale Empfindlichkeit des Photosensors für zu detektierendes gestreutes Licht im ersten und zweiten Wellenlängenbereich festgelegt.

Der Photosensor kann nach einer weiteren Ausführungsform eine Halbleiter-Photodiode sein. Sie ist insbesondere eine Silizium-PIN-Photodiode und vorzugsweise eine Silizium-PIN-Photodiode mit verbesserter Blauempfindlichkeit.

Weiterhin sind gemäss einer weiteren Ausführungsform beide LED-Chips durch die elektronische Steuereinheit abwechselnd gepulst oder gleichzeitig gepulst ansteuerbar. Im ersten Fall ist lediglich ein Photosensor erforderlich. Im zweiten Fall können zwei Photosensoren für das jeweilige zu detektierende Streulicht erforderlich sein.

Schliesslich bilden die Leuchtdiode und der Photosensor vorzugsweise eine Vorwärts-Streulichtanordnung mit einem Streulichtwinkel in einem Bereich von 20° bis 90°, insbesondere in einem Bereich von 30° bis 70°, aus. Die Leuchtdiode und der Photosensor können alternativ eine Rückwärts-Streulichtanordnung mit einem Streulichtwinkel in einem Bereich von mehr als 90° bis 160°, insbesondere in einem Bereich von 110° bis 150°, ausbilden. Es sind auch Kombinationen von Rück- und Vorwärtsstreulichtanordnungen möglich. In diesem Fall ist noch eine weiterer Photosensor oder eine weitere Leuchtdiode erforderlich.

Die Erfindung sowie vorteilhafte Ausführungen der vorliegenden Erfindung werden am Beispiel der nachfolgenden Figuren erläutert. Dabei zeigen:
- FIG 1: eine beispielhafte nach dem Streulichtprinzip arbeitende Detektionseinheit für einen Rauchmelder mit einer Leuchtdiode und mit einem Photoempfänger gemäss der Erfindung,
- FIG 2: eine Schnittdarstellung durch die Detektionseinheit gemäss FIG 1 entlang der Schnittlinie II-II,
- FIG 3: eine Aufsicht auf die Leuchtdiode aus FIG 2 gemäss der dort eingetragenen Blickrichtung III mit zwei LED-Chips zum Aussenden von zweifarbigem Licht,
- FIG 4 - FIG 6: verschiedene Ausführungen eines LED-Chipträgers mit zwei aufgenommenen LED-Chips,
- FIG 7: eine beispielhafte weitere nach dem Streulichtprinzip arbeitende Detektionseinheit für einen Rauchmelder mit einer SMD-Leuchtdiode und mit einem Photoempfänger gemäss der Erfindung, und
- FIG 8: ein Beispiel für die spezifische spektrale Empfindlichkeit einer Silizium-PIN-Photodiode mit erhöhter Blauempfindlichkeit.

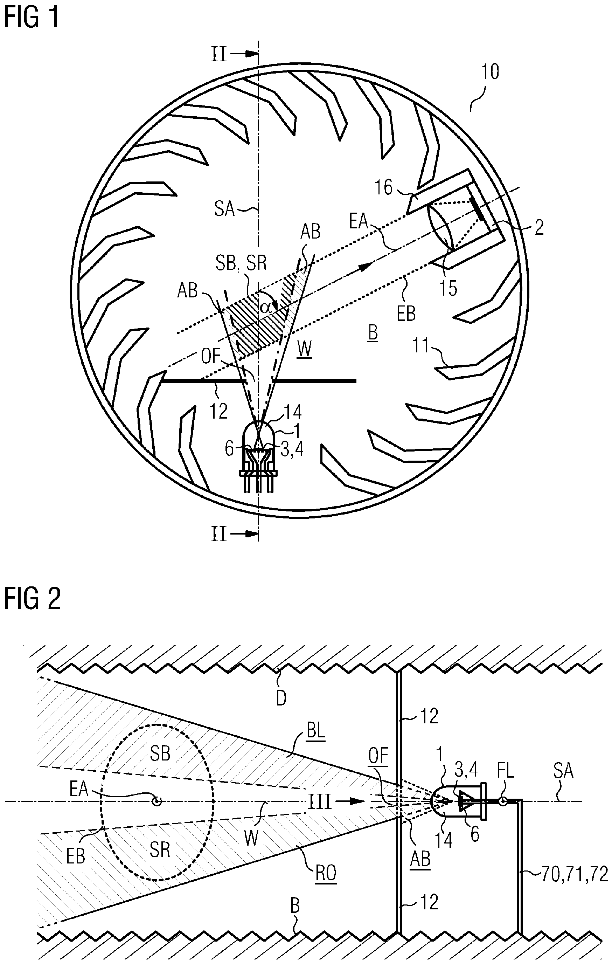

FIG 1 zeigt ein Beispiel für eine nach dem Streulichtprinzip arbeitenden Detektionseinheit 10 für einen Rauchmelder. Die gezeigte erfindungsgemässe Detektionseinheit 10 umfasst eine Leuchtdiode 1 und einen Photoempfänger 2.

Aus Gründen der Übersichtlichkeit ist ein die Detektionseinheit 10 umgebendes Rauchmeldergehäuse nicht dargestellt. Ebenso wurde auf die Darstellung eines typischerweise im Rauchmeldergehäuse aufgenommenen Schaltungsträgers mit Steuereinheit sowie auf die Darstellung von Raucheintrittsöffnungen im Rauchmeldergehäuse verzichtet.

Die Detektionseinheit 10 weist eine optische Messkammer mit einer Vielzahl von Umgebungslicht abschirmenden Lamellen 11 auf. Im Inneren der Detektionseinheit 10 sind gemäss der Erfindung eine (zweifarbige) Leuchtdiode 1 mit zwei LED-Chips 3, 4 sowie ein Photosensor 2 in einer Vorwärts-Streulichtanordnung unter einem Streulichtwinkel α. Im vorliegenden Beispiel beträgt dieser 60°. Beide Bauelemente 1, 2 können alternativ auch unter einem Rückwärtsstreuwinkel für Winkelwerte über 90° angeordnet sein, wie z.B. unter einem Streulichtwinkel α von 120°. Konstruktiv betrachtet ist der Streulichtwinkel α durch den Schnittpunkt der optischen Hauptachse SA der Leuchtdiode 1 und der optischen Empfangsachse EA des Photosensors 2 festgelegt. In praktischer Hinsicht müssen sich die beiden Achsen SA, EA nicht notwendigerweise schneiden, da die Leuchtdiode 1 einen kegelförmigen Abstrahlbereich und der Photosensor 2 gleichfalls einen kegel- oder keulenförmigen Empfangsbereich aufweist, dessen jeweilige geometrische Mitte dann die beiden Achsen SA, EA bilden. Winkelabweichungen von wenigen Grad vom Schnittpunkt im idealen Fall können dabei unberücksichtigt bleiben.

Beide Bauelemente 1, 2 sind typischerweise elektrisch mit einem Schaltungsträger verbunden, der sich üblicherweise ausserhalb der Detektionseinheit 10 befindet und der an diese angrenzt. Auf dem Schaltungsträger können weitere Bauelemente angeordnet sein wie z.B. ein Mikrocontroller, aktive oder passive Bauelemente.

Im Beispiel der FIG 1 ist für die Leuchtdiode 1 eine optische Hauptachse SA und für den Photosensor 2 eine optische Empfängerachse EA eingetragen. Deren Winkel zueinander entspricht dabei dem zuvor beschriebenen Streulichtwinkel α. Die optische Hauptachse SA entspricht typischerweise auch der Symmetrieachse bzw. der konstruktiven Hauptachse einer gezeigten typischen 3 mm- oder 5 mm-Leuchtdiode. Desweiteren ist der Leuchtdiode 1 zur Vermeidung von direktem LED-Licht auf den Photosensor 2 eine Blendeneinrichtung 12 in Form einer Lochblende vorgeschaltet. Die Lochblende 12 bildet - wenn auch im vorliegenden Beispiel nicht erkennbar - eine rechteckige oder quadratische Blendenöffnung OF aus. Letztere ist durch zwei nicht weiter gezeigte, parallel zur Bildebene der FIG 1 verlaufende angrenzende Wände der Detektionseinheit 10 sowie durch die in Normalenrichtung zur Bildebene der FIG 1 verlaufenden Innenränder der Lochblende 12 gebildet.

Die Leuchtdiode 1 weist ein Kunststoffgehäuse auf, welches eine optische Linse 14 zur Lichtbündelung des von der Leuchtdiode 1 erzeugten Lichts in Richtung zur Blendenöffnung OF ausbildet. Die gezeigte Leuchtdiode 1 entspricht in ihrem äusseren Erscheinungsbild dem einer typischen 5 mm-Leuchtdiode für eine "Through-Hole-Montage" mit einem Durchmesser des Kunststoffgehäuses von 5 mm. Alternativ kann diese eine 3 mm-Leuchtdiode sein.

Der gezeigte Photosensor 2 ist ferner von einer Empfängerabblendeinrichtung 16 umgeben. Dem Photosensor 2 ist zudem eine Empfängerlinse 15 zur Fokussierung von Streulicht von zu detektierenden Rauchpartikeln vorgeschaltet.

Ausgehend von der optischen Abbildungsanordnung aus Leuchtdiode 1 und gegenüberliegender Blendeneinrichtung 12 einerseits und ausgehend von der optischen Abbildungsanordnung aus Photosensor 2, umgebender Empfängerabblendeinrichtung 16 und vorgeschalteter Empfängerlinse 15 andererseits, sind zwei Streulichtvolumina SB, SR in geometrischer Hinsicht festgelegt. Nur Streulicht von zu detektierenden Partikeln aus diesen beiden Streulichtvolumina SB, SR gelangen unter einem gemeinsamen gleichen Streulichtwinkel α zu dem Photosensor 2.

Im vorliegenden Beispiel weist die Leuchtdiode 1 erfindungsgemäss einen ersten LED-Chip 3 zum Aussenden eines ersten Lichtbündels BL mit Licht in einem ersten Wellenlängenbereich von 350 nm bis 500 nm, d.h. von blaugrünem, blauem, violettem und ultraviolettem Licht, auf. Die Leuchtdiode 1 weist weiterhin einen zweiten LED-Chip 4 zum Aussenden eines zweiten Lichtbündels RO mit Licht in einem zweiten Wellenlängenbereich von 665 nm bis 1000 nm, d.h. von rot/orangenem, rotem und infrarotem Licht, auf. Beide LED-Chips 3, 4 sind nebeneinander angeordnet. Beide LED-Chips 3, 4 sind typischerweise Flächenstrahler. Derartige Flächenstrahler werden auch als Lambert'sche Strahler bezeichnet.

Erfindungsgemäss weist die Leuchtdiode 1 einen orthogonal zur optischen Hauptachse SA angeordneten LED-Chipträger 6 auf. Der Chipträger 6 ist plattenförmig und plan ausgebildet. Mit anderen Worten ist die Flächennormale des LED-Chipträgers 6 parallel zur optischen Hauptachse SA. Vorzugsweise fluchtet diese Flächennormale auch mit der optischen Hauptachse SA.

Die beiden LED-Chips 3, 4 sind weiter gemäss der Erfindung nebeneinander auf dem LED-Chipträger 6 angeordnet (siehe dazu im Detail die Figur FIG 3). Die Leuchtdiode 1 ist hierbei derart um ihre optische Hauptachse SA gedreht zum Photosensor 2 ausgerichtet, dass eine durch beide LED-Chips 3, 4 verlaufende Chipachse CA orthogonal zu einer durch beide optischen Achsen SA, EA aufgespannten Winkelebene W ist.

Durch die "Übereinanderanordnung" der beiden LED-Chips 3, 4 in der gezeigten Darstellung ist von "oben" in der Projektion betrachtet nur ein Streulichtvolumen SB, SR vorhanden.

Im vorliegenden Beispiel ist die Blendeneinrichtung 12 derart angeordnet und ausgerichtet, dass ein Grossteil des von beiden LED-Chips 3, 4 ausgesandten Lichts in einem Bereich zwischen 50% und 85% durch die Blendenöffnung OF hindurchtritt. Der verbleibende Teil wird somit durch die Blendeneinrichtung 12 in einem Bereich von 50% bis 15% abgeschattet. Mit AB ist der fiktive abgeschattete Bereich zu sehen, der ohne Blendeneinrichtung 12 sonst in das Innere der Detektionseinheit 10 gelangen würde. Dadurch ist eine gewisse Beleuchtungsreserve nach "rechts" und "links" sowie auch nach "oben" und "unten" vorhanden, um mögliche geringfügige Verkippungen (Tilt), Verdrehungen oder Versätze bei der Montage der Leuchtdiode 1 auf dem Schaltungsträger zu kompensieren.

FIG 2 zeigt eine Schnittdarstellung durch die Detektionseinheit 10 gemäss FIG 1 entlang der Schnittlinie II-II.

Im oberen und unteren Bereich der FIG 2 ist ein Decken- und Bodenbereich D, B beziehungsweise eine Messkammerdecke und ein Messkammerboden der als optische Messkammer ausgebildeten Detektionseinheit 10 dargestellt. In der Seitenansicht ist nun zu sehen, wie ein Grossteil des vom ersten LED-Chip 3 ausgesandten "blauen" Lichtbündels BL und ein Grossteil des vom zweiten LED-Chip 4 ausgesandten zweiten "roten" Lichtbündels RO durch die Öffnung OF der Blendeneinrichtung 12 hindurchtreten. Beide Lichtbündel BL, RO überlappen sich zum grossen Teil, wobei das blaue Lichtbündel BL mehr oberhalb und das rote Lichtbündel RO mehr unterhalb verläuft. Mit SB und SR sind die zugehörigen "blauen" und "roten" Streuvolumina bezeichnet. Das blaue Streuvolumen SB ist in geometrischer Hinsicht die Schnittmenge aus dem blauen Lichtbündel BL und dem Empfangsbereich EB des Photoempfängers 2, und das rote Streulichtvolumen SR die Schnittmenge aus dem roten Lichtbündel BL und dem Empfangsbereich EB.

Je nach optischen Eigenschaften der Linse 14 und je nach Abstand der beiden Streulichtvolumina SB, SR von der Leuchtdiode 1 können die beiden Lichtbündel BL, RO auch umgekehrt verlaufen. In einem solchen Fall verläuft dann das rote Lichtbündel RO oberhalb vom blauen Lichtbündel BL. Alternativ oder zusätzlich können sich die beiden Lichtbündel BL, RO mehr oder weniger überschneiden, sodass ein gemeinsames zweifarbiges Streulichtvolumen resultiert.

Weiterhin ist die Winkelebene W erkennbar, welche durch die optische Hauptachse SA der Leuchtdiode 1 und durch die Empfangsachse EA des Photoempfängers 2 aufgespannt ist.

Die im rechten Teil der FIG 2 gezeigte beispielhafte Leuchtdiode 1 ist eine bekannte typische 5 mm-Leuchtdiode für eine für eine "Through-Hole-Montage" mit einem Durchmesser des Kunststoffgehäuses von 5 mm. Deren Anschlusskontakte 70, 71, 72 sind zunächst parallel zur optischen Hauptachse SA aus dem Gehäuse der Leuchtdiode 1 herausgeführt und dann um 90° abgewinkelt, so dass eine einfache elektrische Kontaktierung mit einem nicht weiter gezeigten Schaltungsträger des Streulichtrauchmelders möglich ist. Der Schaltungsträger liegt im vorliegenden Beispiel parallel zur Winkelebene W unterhalb des Messkammerbodens B. Die drei Anschlusskontakte 70, 71, 72 sind in diesem Fall durch den Messkammerboden B hindurchgeführt. Zudem liegen die Anschlusskontakte 70, 71, 72 gemäss der Erfindung in einer gemeinsamen ersten Reihenflucht FL und in der gezeigten Blattebene hintereinander. Die erste Reihenflucht FL verläuft dabei orthogonal zur optischen Hauptachse SA. Sie verläuft im Bereich der Gehäusedurchführung zudem in der Winkelebene W.

FIG 3 zeigt eine Aufsicht auf die Leuchtdiode 1 aus FIG 2 gemäss der dort eingetragenen Blickrichtung III mit zwei LED-Chips 3, 4 zum Aussenden von zweifarbigem Licht.

Mit dem Bezugszeichen 9 ist das Kunststoffgehäuse bezeichnet, in dem der LED-Chipträger 6 als Teil eines Reflektors 5 mit den beiden LED-Chips 3, 4 eingegossen ist. Der Reflektor 5 ist zugleich als gemeinsamer Anschlusskontakt 7 ausgebildet und als mittlerer Anschlusskontakt 70 aus dem Gehäuse 9 herausgeführt. Der mittlere Anschlusskontakt 70 ist zu beiden Seiten durch einen ersten und zweiten Anschlusskontakt 71, 72 umgeben, die zur elektrischen Verbindung mit den beiden LED-Chips 3, 4 vorgehen sind. Die beiden Anschlusskontakte 71, 72 bilden im Bereich des LED-Chipträgers 6 jeweils eine Kontaktierungsfläche zur Kontaktierung der beiden LED-Chips 3, 4 mit diesen über Bonddrähte 8 aus.

Wie die FIG 3 zeigt, sind die beiden LED-Chips 3, 4 derart nebeneinander angeordnet, dass die jeweilige geometrische Mitte der beiden LED-Chips 3, 4 einen gleichen Abstand zur optischen Hauptachse SA der Leuchtdiode 1 aufweist. Die jeweilige geometrische Mitte ist durch ein kleines "x" eingezeichnet.

Die Kanten der beiden LED-Chips 3, 4 sind vorzugsweise parallel und orthogonal zueinander ausgerichtet. Insbesondere sind die beiden LED-Chips 3, 4 dann mittig, also zentriert zueinander angeordnet. Dies zeigt bereits die vorliegende FIG 3. In einem solchen Fall lässt sich die Chipachse CA auch als Gerade definieren bzw. festlegen, die sowohl durch die geometrische Mitte des ersten LED-Chips 3 als auch durch die Mitte des zweiten LED-Chips 4 verläuft. Im gezeigten idealen Fall der FIG 3 sind die beiden LED-Chips 3, 4 derart zueinander ausgerichtet und auf dem Chipträger 6 angeordnet, dass die Chipachse CA zudem noch durch die optische Hauptachse SA der Leuchtdiode 1 verläuft.

In der vorliegenden FIG 3 ist neben der optischen Hauptachse SA der Leuchtdiode 1, die zugleich die konstruktive Hauptachse und Symmetrieachse der Leuchtdiode 1 ist, auch die durch beide LED-Chips 3, 4 und orthogonal zur optischen Hauptachse SA verlaufende Chipachse CA zu sehen. Orthogonal zur Chipachse CA und zugleich orthogonal zur optischen Hauptachse SA ist zusätzlich eine Querachse QA der Leuchtdiode 1 eingetragen.

Gemäss der Erfindung liegen somit die Anschlusskontakte 70, 71, 72 gemeinsam in einer ersten Reihenflucht FL. Sie sind parallel zur optischen Hauptachse SA aus dem Gehäuse 9 der Leuchtdiode 1 herausgeführt. Die erste Reihenflucht FL verläuft sowohl orthogonal zur optischen Hauptachse SA als auch orthogonal zur Chipachse CA und folglich auch parallel zur Querachse QA. Alternativ kann die Leuchtdiode eine Reihe von Anschlusskontakten aufweisen, die in einer parallel zur Chipachse CA verlaufenden zweiten Reihenflucht liegt. Im Vergleich zu vorher ist dann allerdings ein Abknicken der Anschlusskontakte um 90° an unterschiedlichen Positionen ausserhalb des Gehäuses der Leuchtdiode erforderlich.

Gemäss einem weiteren Aspekt der Erfindung liegt das Verhältnis der optisch aktiven Oberfläche des ersten LED-Chips 3 zu der optisch aktiven Oberfläche des zweiten LED-Chips 4 in einem Bereich von 1.3 bis 12, insbesondere in einem Bereich von 2,5 bis 6,5. Im vorliegenden Beispiel liegt das Verhältnis bei etwa 2.78 =(0.5 x 0.5 mm)² / (0.3 x 0.3 mm)², wobei die Seitenlänge der beiden beispielhaft quadratischen LED-Chips 3, 4 eine Kantenlänge von 0.5 mm bzw. 0.3 mm aufweisen.

FIG 4 zeigt eine planen LED-Chipträger 6 mit zwei darauf benachbart angeordneten LED-Chips 3, 4. Dabei weist der "rote" LED-Chip 4 im Vergleich zum "blauen" LED-Chip 3 eine grössere Bauteildicke auf.

Die FIG 5 und FIG 6 zeigen, dass der LED-Chipträger 6 nicht notwendiger plan ausgeführt sein muss. Im Beispiel der FIG 5 weist der LED-Chipträger 6 zwei leicht zueinander geneigte Teilflächen im Sinne einer Kerbe auf, welche jeweils einen LED-Chip 3, 4 aufnehmen. Die beiden Teilflächen sind gleichfalls plan. Im Beispiel der FIG 6 weist der LED-Chipträger 6 gleichfalls zwei Teilflächen auf. Diese weisen im Vergleich zur vorherigen Ausführungsform eine gleiche Orientierung auf. Beide Teilflächen sind durch eine Stufe im Chipträger 6 voneinander getrennt. Die Stufung ist so gewählt, dass bei unterschiedlicher Bauteildicke der beiden LED-Chips 3, 4 ihre optisch aktiven Flächen in einer gemeinsamen Ebene liegen.

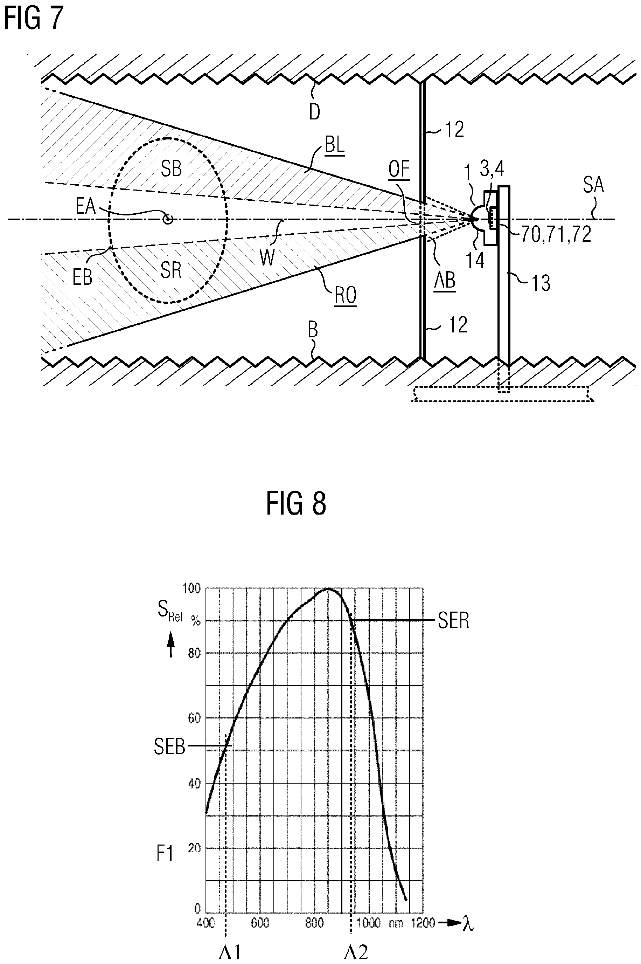

FIG 7 zeigt eine weitere nach dem Streulichtprinzip arbeitende erfindungsgemässe Detektionseinheit 10 für einen Rauchmelder mit einer SMD-Leuchtdiode 1 und einem Photoempfänger 2.

Im Vergleich zur Ausführungsform gemäss FIG 2 ist die dortige "Trough Hole"-LED durch eine SMD-Leuchtdiode 1 ersetzt. Letztere ist direkt auf der Oberfläche der gezeigten Leiterplatte 13 appliziert und verlötet. Die Leiterplatte 13 selbst ist durch eine Öffnung im Bodenbereich B der Detektionseinheit hindurchgeführt und kontaktiert einen nicht weiter bezeichneten Schaltungsträger, auf dem typischerweise die elektrischen und elektronischen Bauelemente des Streulichtrauchmelders angeordnet sind. Der Schaltungsträger ist parallel zur Winkelebene W ausgerichtet. Weiterhin ist die Leiterplatte 13 orthogonal im Schaltungsträger aufgenommen.

Alternativ kann die SMD-Leuchtdiode auch auf der Oberseite des Schaltungsträgers angeordnet sein und durch eine Öffnung im Bodenbereich B der Detektionseinheit "hindurchleuchten". Durch einen derart in der Detektionseinheit angeordneten und ausgerichteten Spiegel oder Lichtleiter (Prisma) können dann die ausgesandten Lichtbündel um 90° fluchtend mit der in FIG 7 eingetragenen optischen Hauptachse SA umgelenkt werden.

FIG 8 zeigt ein Beispiel für die spezifische spektrale Empfindlichkeit S_{Rel} einer Silizium-PIN-Photodiode 2 mit erhöhter Blauempfindlichkeit. Über der Abszisse ist die Lichtwellenlänge λ des detektierten Lichts in Nanometer aufgetragen, über der Ordinate die spezifische spektrale Empfindlichkeit S_{Rel} am Beispiel einer Silizium-PIN-Photodiode vom Typ BPW34B der Fa. OSRAM in Prozentwerten. Die spektrale Empfindlichkeit S_{Rel} ist mit einem 100 %-Wert auf die spektral empfindlichste Lichtwellenlänge bei 850 nm normiert. Wie das Diagramm zeigt, ist die spektrale "blaue" Empfindlichkeit SEB des Photosensors 2 für blaues Licht mit einem Wellenlängenwert Λ1 von 470 nm mit 52 % in etwa 1.7 mal schlechter als die spektrale "rote" Empfindlichkeit SER des Photosensors 2 für infrarotes Licht bei einem Wellenlängenwert Λ2 von 940 nm mit 90 %.

### Bezugszeichenliste

- 1: LED, Leuchtdiode
- 2: Photosensor, Photodiode, Silizium-PIN-Photodiode
- 3, 4: LED-Chip, Flächenstrahler
- 5: Reflektor, Reflektorring
- 6: LED-Chipträger, Träger, Trägerplatte
- 7: Kontaktierungsflächen
- 8: Bonddrähte
- 9: Gehäuse, Kunststoffgehäuse
- 10: Detektionseinheit, Messkammer
- 11: Lamelle, Lichtabschirmelement
- 12: Blendeneinrichtung, Lochblende
- 13: Leiterplatte
- 14: optische Linse
- 15: Empfängerlinse
- 16: Empfängerabblendeinrichtung, Lochblende
- 70-72: Anschlusskontakte
- AB: abgeschatteter Bereich
- B: Boden, Messkammerboden, Bodenbereich
- BL: Lichtbündel, "blaues" Lichtbündel
- CA: Chipachse
- D: Decke
- EA: optische Achse des Empfängers, Empfangsachse
- EB: Empfangsbereich
- FL: Reihenflucht
- OF: Blendenöffnung
- QA: Querachse
- RO: Lichtbündel, "rotes" Lichtbündel
- SA: optische Hauptachse, Symmetrieachse der LED
- SEB: ("blaue") spektrale Empfindlichkeit
- SER: ("rote") spektrale Empfindlichkeit
- S_{Rel}: relative spektrale Empfindlichkeit
- SB, SR: blauer, rotes Streulichtvolumen
- W: Winkelebene
- α: Streulichtwinkel
- λ: Lichtwellenlänge
- Λ1, Λ2: Wellenlängenwerte

## Patentansprüche

1. Streulichtrauchmelder mit einer nach dem Streulichtprinzip arbeitenden Detektionseinheit (10), welche eine Leuchtdiode (1) zum Bestrahlen von zu detektierenden Partikeln und einen dafür spektral empfindlichen Photosensor (2) zur Detektion des von den Partikeln gestreuten Lichts aufweist, wobei die Leuchtdiode (1) eine optische Hauptachse (SA) und der Photosensor (2) eine optische Empfangsachse (EA) aufweist, wobei die Leuchtdiode (1) und der Photosensor (2) derart zueinander angeordnet und ausgerichtet sind, dass durch beide optischen Achsen (SA, EA) ein Streulichtwinkel (α) festgelegt ist, wobei die Leuchtdiode (1) einen ersten und zweiten LED-Chip (3, 4) zum Aussenden eines ersten und zweiten Lichtbündels (BL, RO) mit Licht in einem ersten und in einem davon verschiedenen zweiten Wellenlängenbereich aufweist, wobei die Leuchtdiode (1) einen orthogonal zur optischen Hauptachse (SA) angeordneten LED-Chipträger (6) aufweist, und wobei die beiden LED-Chips (3, 4) nebeneinander auf dem LED-Chipträger (6) angeordnet sind, **dadurch gekennzeichnet,**
**dass** die Leuchtdiode (1) derart um ihre optische Hauptachse (SA) gedreht zum Photosensor (2) ausgerichtet ist, dass eine durch die geometrische Mitte des ersten LED-Chips (3) und durch die Mitte des zweiten LED-Chips (4) verlaufende Chipachse (CA) orthogonal zu einer durch beide optischen Achsen (SA, EA) aufgespannten Winkelebene (W) ist.

2. Streulichtrauchmelder nach Anspruch 1, wobei die beiden LED-Chips (3, 4) derart nebeneinander angeordnet sind, dass die jeweilige geometrische Mitte der beiden LED-Chips (3, 4) einen gleichen Abstand zur optischen Hauptachse (SA) der Leuchtdiode (1) aufweist.

3. Streulichtrauchmelder nach Anspruch 1 oder 2, wobei die beiden LED-Chips (3, 4) derart nebeneinander angeordnet sind, dass die Chipachse (CA) sowohl durch die optische Hauptachse (SA) der Leuchtdiode (1) als auch durch die jeweilige geometrische Mitte der beiden LED-Chips (3, 4) verläuft.

4. Streulichtrauchmelder nach einem der vorherigen Ansprüche, wobei die beiden LED-Chips (3, 4) orthogonal zur optischen Hauptachse (SA) der Leuchtdiode (1) auf dem Chipträger (6) ausgerichtet sind.

5. Streulichtrauchmelder nach einem der vorherigen Ansprüche, wobei die Leuchtdiode (1) zumindest zwei Anschlusskontakte (70, 71, 72) aufweist, die aus einem Gehäuse (9) der Leuchtdiode (1) herausgeführt sind, wobei die Anschlusskontakte (70, 71, 72) mit den LED-Chips (3, 4) derart kontaktiert sind, dass der erste oder der zweite LED-Chip (3, 4) elektrisch zur Lichtaussendung ansteuerbar ist.

6. Streulichtrauchmelder nach einem der vorherigen Ansprüche, wobei das Verhältnis der optisch aktiven Oberfläche des ersten LED-Chips (3) zu der optisch aktiven Oberfläche des zweiten LED-Chips (4) in einem Bereich von 1.3 bis 12, insbesondere in einem Bereich von 2.5 bis 6.5 liegt.

7. Streulichtrauchmelder nach einem der vorherigen Ansprüche, wobei der erste LED-Chip (3) zum Aussenden von Licht im Wellenlängenbereich von 350 nm bis 500 nm ausgebildet ist und wobei der zweite LED-Chip (4) zum Aussenden von Licht im Wellenlängenbereich von 665 nm bis 1000 nm ausgebildet ist.

8. Streulichtrauchmelder nach Anspruch 7, wobei der erste LED-Chip (3) zum Aussenden von Licht mit einer Wellenlänge von 460 nm ± 40 nm oder 390 nm ± 40 nm und der zweite LED-Chip (4) zum Aussenden von Licht mit einer Wellenlänge von 940 nm ± 40 nm oder 860 nm ± 40 nm ausgebildet ist.

9. Streulichtrauchmelder nach einem der vorherigen Ansprüche, wobei der Streulichtrauchmelder eine gegenüber Umgebungslicht abgeschirmte, jedoch für zu detektierende Partikel durchlässige Detektionseinheit (10) aufweist, wobei die Leuchtdiode (1) und der Photosensor (2) sowie eine dazwischenliegende Blendeneinrichtung (12) in der Detektionseinheit (10) angeordnet sind, wobei die Blendeneinrichtung (12) eine Blendenöffnung (OF) umfasst sowie derart angeordnet und ausgerichtet ist, dass ein Grossteil des von den beiden LED-Chips (3, 4) ausgesandten Lichts in einem Bereich zwischen 50 % und 85 % durch die Blendenöffnung (OF) hindurchtritt.

10. Streulichtrauchmelder nach Anspruch 9, wobei die Leuchtdiode (1) ein Gehäuse (9) aus einem insbesondere transparenten Kunststoff aufweist und wobei das Gehäuse (9) in einem Bereich zwischen dem Lichtaustritt aus den beiden LED-Chips (3, 4) und dem Lichtaustritt an der Aussenseite des Gehäuses (9) eine optische Linse (14) ausbildet.

11. Streulichtrauchmelder nach Anspruch 9 oder 10, wobei zwischen der Leuchtdiode (1) und der Blendenöffnung (OF) eine optische Linseneinheit angeordnet ist.

12. Streulichtrauchmelder nach einem der vorherigen Ansprüche, wobei dieser eine mit der Leuchtdiode (1) und mit dem Photosensor (2) verbundene elektronische Steuereinheit aufweist, wobei die Steuereinheit dazu eingerichtet ist, eine Warnmeldung und/oder eine Alarmmeldung auszugeben, falls ein Mindestkonzentrationswert von Rauch detektierbar ist.

13. Streulichtrauchmelder nach einem der vorherigen Ansprüche, wobei der Photosensor (2) eine Halbleiter-Photodiode, insbesondere eine Silizium-PIN-Photodiode ist.

14. Streulichtrauchmelder nach einem der vorherigen Ansprüche, wobei die beiden LED-Chips (3, 4) durch die elektronische Steuereinheit abwechselnd gepulst ansteuerbar sind.

15. Streulichtrauchmelder nach einem der vorherigen Ansprüche, wobei die Leuchtdiode (1) und der Photosensor (2) eine Vorwärts-Streulichtanordnung mit einem Streulichtwinkel (α) in einem Bereich von 20° bis 90°, insbesondere von 30° bis 70°, oder eine Rückwärts-Streulichtanordnung mit einem Streulichtwinkel (α) in einem Bereich von mehr als 90° bis 160°, insbesondere von 110° bis 150°, ausbilden.

## Claims

1. Scattered-light smoke detector with a detector unit (10) that works according to the scattered-light principle, comprising a light-emitting diode (1) to irradiate particles to be detected and a photosensor (2) which is spectrally sensitive thereto to detect the light scattered by the particles, wherein the light-emitting diode (1) has a principal optical axis (SA) and the photosensor (2) has an optical receiving axis (EA), wherein the light-emitting diode (1) and the photosensor (2) are arranged and aligned with respect to each other such that the two optical axes (SA, EA) define a scattered-light angle (α), wherein the light-emitting diode (1) comprises a first and a second LED chip (3, 4) for emitting a first and a second light bundle (BL, RO) with light in a first wavelength range and in a second wavelength range that is different therefrom, wherein the light-emitting diode (1) comprises an LED chip carrier (6) arranged orthogonally to the principal optical axis (SA), and wherein the two LED chips (3, 4) are arranged side-by-side on the LED chip carrier (6), **characterised in that**
the light-emitting diode (1) is rotated about its principal optical axis (SA) aligned toward the photosensor (2) such that a chip axis (CA) extending through the geometric centre of the first LED chip (3) and through the centre of the second LED chip (4) is orthogonal to an angle plane (W) defined by the two optical axes (SA, EA).

2. Scattered-light smoke detector according to claim 1, wherein the two LED chips (3, 4) or that the respective geometric centre of two LED chips (3, 4) is at the same distance from the principal optical axis (SA) of the light-emitting diode (1).

3. Scattered-light smoke detector according to claim 1 or 2, wherein the two LED chips (3, 4) are arranged side-by-side such that the chip axis (CA) extends through both the principal optical axis (SA) of the light-emitting diode (1) and through the respective geometric centre of the two LED chips (3, 4).

4. Scattered-light smoke detector according to one of the preceding claims, wherein the two LED chips (3, 4) are aligned orthogonally to the principal optical axis (SA) of the light-emitting diode (1) on the chip carrier (6).

5. Scattered-light smoke detector according to one of the preceding claims, wherein the light-emitting diode (1) comprises at least two terminal contacts (70, 71, 72) brought out of a housing (9) of the light-emitting diode (1), wherein the terminal contacts (70, 71, 72) are in contact with the LED chips (3, 4) such that the first or the second LED chip (3, 4) can be controlled electrically for the emission of light.

6. Scattered-light smoke detector according to one of the preceding claims, wherein the ratio of the optically active surface of the first LED chip (3) to the optically active surface of the second LED chip (4) is within a range of from 1.3 to 12, in particular within a range of from 2.5 to 6.5.

7. Scattered-light smoke detector according to one of the preceding claims, wherein the first LED chip (3) is embodied to emit light in the wavelength range of from 350 nm to 500 nm and wherein the second LED chip (4) is embodied to emit light in the wavelength range of from 665 nm to 1000 nm.

8. Scattered-light smoke detector according to claim 7, wherein the first LED chip (3) is embodied to emit light with a wavelength of 460 nm ± 40 nm or 390 nm ± 40 nm and the second LED chip (4) is embodied to emit light with a wavelength of 940 nm ± 40 nm or 860 nm ± 40 nm.

9. Scattered-light smoke detector according to one of the preceding claims, wherein the scattered-light smoke detector comprises a detector unit (10) that is shielded against ambient light but permeable to particles to be detected, wherein the light-emitting diode (1), the photosensor (2) and an intermediate diaphragm mechanism (12) are arranged in the detector unit (10), wherein the diaphragm mechanism (12) comprises a diaphragm aperture (OF) and is disposed and aligned such that a large part of the light emitted by the two LED chips (3, 4) passes through the diaphragm aperture (OF) in a range of between 50% and 85%.

10. Scattered-light smoke detector according to claim 9, wherein the light-emitting diode (1) comprises a housing (9) made of a, in particular, transparent plastic and wherein the housing (9) forms an optical lens (14) in a region between the light outlet from the two LED chips (3, 4) and the light outlet on the outside of the housing (9).

11. Scattered-light smoke detector according to claim 9 or 10, wherein an optical lens unit is arranged between the light-emitting diode (1) and the diaphragm aperture (OF).

12. Scattered-light smoke detector according to one of the preceding claims, wherein this comprises an electronic control unit connected to the light-emitting diode (1) and to the photosensor (2), wherein the control unit is configured to output a warning and/or an alarm when a minimum concentration value of smoke can be detected.

13. Scattered-light smoke detector according to one of the preceding claims, wherein the photosensor (2) is a semiconductor photodiode, in particular a silicon PIN photodiode.

14. Scattered-light smoke detector according to one of the preceding claims, wherein the two LED chips (3, 4) can be controlled by the electronic control unit with alternative pulsing.

15. Scattered-light smoke detector according to one of the preceding claims, wherein the light-emitting diode (1) and the photosensor (2) form a forward scattered-light arrangement with a scattered-light angle (α) within a range of from 20° to 90°, in particular of from 30° to 70°, or a backward scattered-light arrangement with a scattered-light angle (α) within a range of from more than 90° to 160°, in particular of from 110° to 150°.

## Revendications

1. Détecteur de fumée à lumière diffusée comportant une unité de détection (10) fonctionnant selon le principe de diffusion de lumière qui comprend une diode lumineuse (1) pour irradier des particules à détecter et un photodétecteur (2) sensible spectralement pour détecter la lumière diffusée par les particules, dans lequel la diode lumineuse (1) comprend un axe optique principal (SA) et le photodétecteur (2) comprend un axe de réception optique (EA), et la diode lumineuse (1) et le photodétecteur (2) sont agencés et orientés l'un par rapport à l'autre de telle manière qu'un angle de lumière diffusée (α) est déterminé par les deux axes optiques (SA, EA), et dans lequel la diode lumineuse (1) comprend une première et une seconde puces à DEL (3, 4) destinées à émettre un premier et un second faisceaux de lumière (BL, RO) dans un premier et un second domaine de longueur d'ondes différent du premier, la diode lumineuse (1) comportant un support de puce à DEL agencé de façon perpendiculaire à l'axe optique principal (SA) et les deux puces à DEL (3, 4) étant disposées l'une à côté de l'autre sur le support de puce à DEL (6),
**caractérisé en ce que** la diode lumineuse (1) est orientée autour de son axe optique principal (SA) de façon tournée par rapport au photodétecteur (2) de telle manière qu'un axe de puce (CA) passant par le centre géométrique de la première puce à DEL (3) et par le centre de la seconde puce à DEL (4) est orthogonal à un plan angulaire (W) défini par les deux axes optiques (SA, EA).

2. Détecteur de fumée à lumière diffusée selon la revendication 1, dans lequel les deux puces à DEL (3, 4) sont agencées l'une à côté de l'autre de manière à ce que le centre géométrique respectif des deux puces à DEL (3, 4) soit situé à une même distance de l'axe optique principal (SA) de la diode lumineuse (1).

3. Détecteur de fumée à lumière diffusée selon la revendication 1 ou 2, dans lequel les deux puces à DEL (3, 4) sont agencées l'une à côté de l'autre de manière à ce que l'axe de puce (CA) passe par l'axe optique principal (SA) de la diode lumineuse (1) ainsi que par le centre géométrique respectif des deux puces à DEL (3, 4).

4. Détecteur de fumée à lumière diffusée selon l'une des revendications précédentes, dans lequel les deux puces à DEL (3, 4) sont agencées de façon orthogonale à l'axe principal optique (SA) de la diode lumineuse (1) sur le support de puce (6) .

5. Détecteur de fumée à lumière diffusée selon l'une des revendications précédentes, dans lequel la diode lumineuse (1) comprend au moins deux contacts de connexion (70, 71, 72) qui sont amenés à partir d'un boîtier (9) de la diode lumineuse (1), et les contacts de connexion (70, 71, 72) sont mis en contact avec les puces à DEL (3, 4) de manière à ce que la première et la seconde puces à DEL (3, 4) soient excitables électriquement pour émettre de la lumière.

6. Détecteur de fumée à lumière diffusée selon l'une des revendications précédentes, dans lequel le rapport de la surface optiquement active de la première puce à DEL (3) à la surface optiquement active de la seconde puce à DEL (4) est compris entre 1,3 et 12, notamment entre 2,5 et 6,5.

7. Détecteur de fumée à lumière diffusée selon l'une des revendications précédentes, dans lequel la première puce à DEL (3) est conçue pour émettre de la lumière dans un domaine de longueurs d'onde de 350 nm à 500 nm et la seconde puce à DEL (4) est conçue pour émettre de la lumière dans un domaine de longueurs d'onde de 665 nm à 1000 nm.

8. Détecteur de fumée à lumière diffusée selon la revendication 7, dans lequel la première puce à DEL (3) est conçue pour émettre de la lumière à une longueur d'onde de 460 nm ± 40 nm ou de 390 nm ± 40 nm et la seconde puce à DEL (4) est conçue pour émettre de la lumière à une longueur d'onde de 940 nm ± 40 nm ou de 860 nm ± 40 nm.

9. Détecteur de fumée à lumière diffusée selon l'une des revendications précédentes, dans lequel le détecteur de fumée à lumière diffusée comprend une unité de détection (10) protégée de la lumière ambiante, mais perméable aux particules à détecter, et dans lequel la diode lumineuse (1) et le photodétecteur (2) ainsi qu'un dispositif de diaphragme (12) agencé entre eux sont disposés dans l'unité de détection (10), le dispositif de diaphragme (12) comportant une ouverture de diaphragme (OF) et étant conçu et agencé de manière à ce qu'une grande partie de la lumière émise par les deux puces à DEL (3, 4), à raison de 50 à 80 %, soit transmise à travers l'ouverture de diaphragme (OF).

10. Détecteur de fumée à lumière diffusée selon la revendication 9, dans lequel la diode lumineuse (1) comprend un boîtier (9) en matière plastique notamment transparente et le boîtier (9) forme une lentille optique (14) dans une zone entre la sortie de la lumière des deux puces à DEL (3, 4) et la sortie de lumière sur le côté extérieur du boîtier (9).

11. Détecteur de fumée à lumière diffusée selon la revendication 9 ou 10, dans lequel une unité de lentille optique est disposée entre la diode lumineuse (1) et l'ouverture de diaphragme (OF).

12. Détecteur de fumée à lumière diffusée selon l'une des revendications précédentes, dans lequel celui-ci comprend une unité de commande électronique connectée à la diode lumineuse (1) et au photodétecteur (2), l'unité de commande étant conçue de manière à émettre un message d'avertissement et/ou un message d'alarme dans le cas où une valeur de concentration minimale de fumée est détectable.

13. Détecteur de fumée à lumière diffusée selon l'une des revendications précédentes, dans lequel le photodétecteur (2) est une photodiode à semi-conducteur, notamment une photodiode PIN au silicium.

14. Détecteur de fumée à lumière diffusée selon l'une des revendications précédentes, dans lequel les deux puces à DEL (3, 4) sont excitables par l'unité de commande électronique par impulsions alternées.

15. Détecteur de fumée à lumière diffusée selon l'une des revendications précédentes, dans lequel la diode lumineuse (1) et le photodétecteur (2) forment un agencement à diffusion de lumière vers l'avant ayant un angle de diffusion de lumière (α) compris entre 20° et 90°, notamment entre 30° et 70°, ou un agencement à diffusion de lumière vers l'arrière ayant un angle de diffusion de lumière (α) compris entre plus de 90° et 160°, notamment entre 110° et 150°.
